# DEMANDE DE BREVET EUROPEEN

(11) **EP 3 944 767 A2**
(43) Date de publication de la demande: **02.02.2022**
(21) Numéro de dépôt: 21188673.4
(22) Date de dépôt: 30.07.2021
(51) Int. Cl.: A23C 20/00, A23C 20/02

(54) **SOLIDE TRANCHABLE**

(30) Priorité: 31.07.2020 FR 2008200
(71) Demandeur: SAVENCIA SA, 78220 Viroflay (FR)
(72) Inventeur: DURAND, Fabien, 24430 Razac sur L'Isle (FR); PADEL, Virginie, 28170 FAVIERES (FR); CIBRARIO, Alice, 78000 Versailles (FR)
(74) Mandataire: Gevers & Orès

(57) **Abrégé**

La présente invention se rapporte au domaine de l'industrie alimentaire ; elle vise plus particulièrement la préparation de produits alimentaires, des solides tranchables, composés d'ingrédients végétaux et présentant des propriétés organoleptiques proches de celles de produits laitiers.

## Description

La présente invention se rapporte au domaine de l'industrie alimentaire ; elle vise plus particulièrement la préparation de produits alimentaires, des solides tranchables, composés d'ingrédients végétaux et présentant des propriétés organoleptiques proches de celles de produits laitiers.

Que ce soit par conviction éthique ou pour des raisons nutritionnelles, la demande en produits alimentaires végétariens voire végétaliens est en constante croissance. Il existe toutefois des produits alimentaires dont la fabrication requiert par définition l'utilisation d'ingrédients d'origine animale comme c'est le cas du lait de mammifère pour la préparation de produits laitiers comme le fromage.

La Demanderesse s'est donnée pour objectif la mise au point de produits alimentaires analogues à des produits laitiers à partir de matières premières végétales afin de générer des produits compatibles avec une alimentation végétalienne (« Vegan ») tout en restant dans l'univers organoleptique de produits laitiers de type fromages tranchables non affinés tant sur l'aspect, la texture ou encore le gout. Par fromage tranchable non affiné, on entend des produits solides sans croute vivante et suffisamment fermes pour être tranchés et conserver au moins partiellement leur forme lors de leur usage respectif. Cela inclut notamment des produits de type fromage à salade tels que des analogues de feta et mozzarella ; des fromages préhensibles aux doigts tels qu'analogues de portions fondus, des analogues de pâtes pressées (par exemple sous la forme de blocs, tranches, ou râpés) et toastinettes (pouvant également être connues sous le nom anglais de « individually wrapped slices » (IWS) ou de « slice on slice » (SOS)) burger, ou même encore des analogues de bûches et pâtes molles fraîches. Par analogue de fromage, par exemple de feta et de mozzarella, on entend en particulier des produits végétaux qui ambitionnent de reproduire les attributs texturaux et/ou sensoriels de ces référents laitiers.

Cela sous-entend des caractéristiques rhéologiques bien spécifiques pour répondre aux exigences des usages produits.

Les fromages sont une catégorie de produits laitiers frais obtenus à partir de lait liquide, milieu colloïdal composé de protéines de taille submicronique, de globules gras, sucres et sels minéraux. Le lait est potentiellement enrichi de crème ou d'autres dérivés laitiers puis soumis à un traitement thermique (thermisation ou pasteurisation) et/ou physique (microfiltration) afin d'être coagulé par voie enzymatique (présure) et/ou microbiologique (bactéries lactiques notamment). Le caillé est ensuite cassé mécaniquement, égoutté et/ou pressé puis éventuellement affiné pour produire une variété de fromages tels que pâtes molles, pâtes pressées, etc.... Les caillés peuvent également être mélangés avec d'autres ingrédients (protéines laitières, crème, épices, fines herbes, sel, etc...) puis soumis à des traitements thermomécaniques afin d'obtenir des spécialités fromagères, qui ont un goût fromager frais (ou de fromage frais), une couleur blanche et un aspect plus ou moins lisse.

Les analogues fromagers sont définis comme des produits obtenus en mélangeant différents ingrédients tels que des protéines et matières grasses, d'origine laitière ou non et formulés de manière à répondre à un besoin fonctionnel spécifique (Bachman, H.P., 2001, « Cheese analogues: a review », International Dairy Journal, Volume 11, 505-515). Historiquement, ces produits ont plutôt été formulés dans un objectif de réduction de coût, notamment avec les fromages à pizza. Plus récemment, le segment des analogues végétaux visant à reproduire les caractéristiques d'aspect et de goût des différents fromages a connu une forte expansion commerciale, et différents produits sont disponibles sur le marché avec des stratégies de formulation variées.

On connaît par exemple les analogues fromagers végétaux obtenus en émulsionnant de la matière grasse dans une phase aqueuse contenant des amidons, comme par exemple les produits de marque Violife^{®}, Nurishh^{®}, Valio Oddlygood^{®}, Simply V^{®}, Bedda^{®}, Superbom^{®} ou encore Green Vie^{®}. Ces produits ont une faible teneur en protéines (entre 0 et 1%) et leur texturation est assurée par l'utilisation conjointe de matières grasses, d'amidons et d'additifs de type hydrocolloïdes (amidons modifiés, gomme xanthane, gomme caroube, méthylcellulose, agar-agar, etc.). Différents autres additifs sont fréquemment utilisés pour leur fonction acidifiante, colorante ou préservatrice : acide citrique (E330), glucono-delta-lactone (E575), citrate tricalcique (E333), ascorbate de sodium (E301), acide sorbique (E200), beta-carotène (E160a) etc.... Les produits se présentent sous des formes variées de type bloc, boules, tranches ou encore râpés. D'un point de vue nutritionnel, ces produits ressortent très éloignés des référents laitiers avec un ratio matière grasse sur matière protéique très défavorable.

Il existe également des produits obtenus à base de matières premières végétales ayant subi différents traitements tels que décorticage, traitements thermiques, broyage, fermentation, voire germination. Ces matières premières végétales sont essentiellement des graines telles que le riz (produit Mozzarisella^{®}), le soja (alternative végétale au fromage grec de marque Soyananda^{®}) et des fruits à coques. Parmi les fruits à coque, la noix de cajou est la plus fréquemment utilisée. Il existe par exemple des analogues de parmesan obtenus en broyant directement à sec des fruits à coque, essentiellement des noix de cajou et en ajoutant des molécules aromatiques (produits de marque Wege Siostry^{®}, Good Carma^{®} ou Willicroft^{®}). Ces produits sont essentiellement anhydres et ont une valeur calorique très élevée, entre 500 et 550 kcal / 100g) et se présentent sous la forme de poudres ou flocons.

Il est également connu de mettre en œuvre des quantités importantes de noix de cajou broyées, d'ajouter de l'eau puis de fermenter la suspension par des bactéries lactiques. Les produits de la marque Happy Cashew^{®}, Euro Company^{®} (Fermè^{®}, Cicioni^{®}, Camelia^{®}), correspondent à ce procédé d'obtention. La valeur calorique est élevée, le plus souvent entre 400 et 500 kcal/100g, en lien avec l'extrait sec important de ces produits. Ils sont généralement perçus par les consommateurs comme secs en bouche, dénués d'une sensation de fraîcheur, en raison notamment d'une faible humidité perçue lors de la consommation.

Certains autres produits à base de fruits à coque ont un extrait sec inférieur mais utilisent différents additifs (texturants, acidifiants, conservateurs, etc...) pour texturer le produit et assurer sa conservation dans le temps. C'est notamment le cas du produit Mondarella^{®} à base d'amande, du cottage cheese sous la Marque Yogan^{®} à base d'amande ou encore par exemple du produit Veganella^{®} de Soyana^{®} à base de cajou. Ces produits, de par la présence d'additifs dans la liste d'ingrédients, se distinguent alors des référents laitiers avec des formulations non « Clean Label ».

En conclusion, les analogues végétaux de l'art antérieur sont le plus souvent
- soit des gels d'amidon dans lesquels de la matière grasse est émulsionnée, avec une teneur en protéine très faible (<1g/100g).
- soit des suspensions concentrées de fruits à coques ayant un fort extrait sec, à l'origine d'une teneur en protéines et d'une valeur calorique élevées.

Il est cependant à noter que le fait d'ajouter de l'eau auxdites suspensions concentrées pour pallier les désavantages mentionnés plus haut engendrent des problèmes de texturation qui nécessitent très généralement l'utilisation d'additifs texturants.

Un objectif que s'est fixé la Demanderesse est d'obtenir des fromages solides végétaux non affinés à partir de fruits à coques broyés ayant notamment une teneur protéique supérieure ou égale à 3%, sans recourir à l'ajout d'additifs et d'une autre source protéique supplémentaire de type concentrats ou isolats.

Un autre objectif de la présente invention est d'obtenir des fromages solides végétaux ayant un profil aromatique dénué de notes indésirables, c'est-à-dire notamment de notes n'appartenant pas aux notes du monde des fromages et ce notamment via l'ajout de matières premières fermentées par des souches d'intérêt.

Encore un autre objectif de la présente invention est de fournir des fromages solides végétaux sans recourir à une fermentation destinée à texturer la composition de départ pour former lesdits fromages.

L'obtention d'analogues végétaux de produits laitiers pose de nombreux problèmes techniques.

Il est notamment difficile d'obtenir un produit ayant une typicité laitière ou fromagère à partir de matières premières végétales, notamment la couleur blanche qui permet de rappeler l'univers du fromage.

Un autre problème est de s'affranchir totalement de matières premières animales, telles que les protéines laitières ou les œufs, dont la fonctionnalité texturante, liante, gélifiante, stabilisante, émulsifiante, foisonnante, etc... pourrait être mise à profit.

Un problème technique proche est d'avoir un produit fini dénué d'additifs tels qu'émulsifiants, acidifiants/correcteurs d'acidité, gommes et autres hydrocolloïdes (amidons modifiés, gomme xanthane, gomme caroube, méthylcellulose, agar-agar, etc...), ingrédients couramment utilisés dans les fromages vegan pour leur fonctionnalité texturante et stabilisante : les texturants modifient le comportement rhéologique des analogues fromagers, les rendant plus ou moins fermes, préhensibles, cassants, gélifiés, etc... Ils ont également un rôle stabilisant par leur capacité à lier l'eau libre, limitant ainsi les risques de synérèse (exsudation d'eau) sur le produit fini, phénomène perçu comme un défaut de qualité. Un autre problème technique majeur pour les produits à trancher tels que les pâtes pressées est de retrouver les 2 propriétés de texture spécifiques de cette catégorie que sont la fermeté et la déformabilité sans utiliser d'additif. Les leviers permettant de retrouver ces caractéristiques sont souvent diamétralement opposés et l'absence d'additif ne permet pas de retrouver les textures identiques aux référents laitiers. Il est effectivement très complexe de combiner fermeté et déformabilité car la fermeté est souvent synonyme de cassant alors que la déformabilité est bien souvent liée à des produits mous.
L'identification de solutions techniques spécifiques de cette problématique a donc été clé pour retrouver des textures plus ou moins déformables, fermes et tranchables et ainsi générer un univers de textures larges et variées répondants à différents usages.

Il est également difficile d'obtenir des analogues fromagers non affinés aux profils sensoriels de produits laitiers sans typicité végétale pour se rapprocher au mieux de l'univers organoleptique des référents laitiers... Le profil aromatique comporte souvent des notes végétales détectables et qui peut ne pas convenir à certains consommateurs à la recherche d'une expérience sensorielle semblable à celle d'un produit laitier.

Grace à une sélection spécifique des matières premières végétales, couplée à une maitrise d'un procédé permettant de générer des analogues de fromages solides non affinés, la Demanderesse est parvenue à préparer des produits alimentaires composés de matières premières végétales et qui présentent des qualités organoleptiques reproduisant celles de fromages solides non affinés sans recourir à l'utilisation d'additif alimentaire tout en ayant un profil nutritionnel équivalent ou amélioré par rapport aux autres produits végétaux déjà disponibles sur le marché.

Avantageusement, cette sélection de matières premières végétales permet de proposer des produits présentant une teneur significative en protéines (notamment supérieure ou égale à 3%), une teneur modérée en matières grasses (inférieure à 25%) et pouvant présenter des teneurs en acides gras saturés (inférieure à 5%) et des teneurs en fibres alimentaires (supérieure ou égale à 3%) et ce, sur des bases de formulations « Clean Label » c'est-à-dire dépourvues d'additif alimentaire. Selon le choix de la matière grasse et de la teneur en fibres ajoutées, il est alors possible d'aboutir à des profils nutritionnels équivalents ou même supérieurs à des équivalents fromagers, en l'occurrence via un Nutri-Score A à D. Le Nutri-Score est un outil d'évaluation de la qualité nutritionnelle mis en place en 2016 en France dans le cadre du Plan National Nutrition et Santé. Selon ses caractéristiques nutritionnelles, un produit alimentaire obtient une note Nutri-Score variant de A (produits les plus favorables sur le plan nutritionnel) à E (produits les moins favorables, dont la consommation doit être limitée).

L'absence d'additif de type texturant (amidons modifiés, agar, caroube, xanthane, carraghénanes, dérivés cellulosiques, etc...) dans les formules a également dû être compensée par des ingrédients de type amidon et/ou farine. Cette compensation n'est pas sans conséquence et a entraîné notamment deux nouveaux problèmes techniques :
- Une dégradation organoleptique du produit avec une augmentation des gouts et odeurs indésirables végétales et une perte de blancheur. En effet, outre les notes végétales et colorations classiquement plus marquées sur des ingrédients de type farine ou amidon que sur des texturants de type additifs, les teneurs incorporées pour produire un effet texturant similaire sont nettement plus importantes ce qui empire d'autant les défauts organoleptiques de gout et couleur. Il est alors essentiel de choisir des ingrédients qui permettent de limiter/supprimer ces défauts.
- Une plus grande évolutivité de texture au cours de la durée de vie du produit avec notamment des phénomènes de rétrogradation de l'amidon observés, synonyme de prise en fermeté au cours de la conservation à 4-6°C.

La présente invention permet également de résoudre la problématique de composition de la plupart des « fromages » végétaux qui ne contiennent que très peu (moins de 1%) de protéines. Les produits selon l'invention contiennent classiquement entre 3 et 10% en poids de protéines sans nécessiter l'ajout de concentrât ou d'isolat protéique et ont donc un profil nutritionnel et organoleptique améliorés par rapport aux fromages vegan de l'art antérieur, avec des notes Nutri-Score de A à D pour les valeurs préférentielles.

Enfin, la présente invention permet de contourner les problématiques de défauts de gout, de couleur et de texture fréquemment retrouvés dans les analogues végétaux de fromages. Contrairement aux produits actuellement présents sur le marché, les produits issus de cette invention se rapprochent des équivalents laitiers sur ces 3 critères.

L'obtention de textures solides et fondantes pour des produits Vegan, notamment à teneur en protéines végétales supérieure ou égale à 3%, sans texturant ni stabilisant reste en effet une difficulté technique majeure. La présente invention permet ainsi de répondre à cette problématique via la mise en place de leviers formules et procédés qui génèrent des textures sans défaut de farineux.

De même, obtenir un aspect blanc-crème avec une teneur significative en protéines est une réelle difficulté mais reste pourtant un élément essentiel pour rappeler l'équivalent fromager. On retrouve sur le marché de nombreux produits Vegan aux aspects bien blancs mais basés sur des formulations de type Eau + huile + texturants donc sans protéine. Là encore, afin de contourner cette difficulté technique, des leviers formules (choix des bonnes matières premières) et procédés (étapes de mélange et d'homogénéisation) ont permis de retrouver un aspect identique à des analogues de fromages solides non affinés.

La présente invention se rapporte ainsi à un produit alimentaire végétal analogue à des fromages solides non affinés, comprenant :
- des fruits à coque broyés, de préférence sous forme de purée et de préférence de la purée d'amandes ;
additionnés de :
- au moins une matière grasse végétale ;
- au moins une source d'amidon ;
- au moins un ingrédient naturel acidifiant ;
- optionnellement, au moins une source de fibres alimentaires végétales ; et
- de l'eau ;
caractérisé en ce qu'il ne contient aucun additif ajouté.

Par « aucun additif ajouté », on entend notamment l'absence d'additifs déclarés dans la liste d'ingrédients dudit produit alimentaire végétal, en particulier sur le pack dudit produit alimentaire végétal.

A titre d'exemple, le sel (pouvant être un ingrédient dudit produit alimentaire végétal) est susceptible de contenir un ou des antimottants, lesquels ne sont pas des additifs ajoutés.

L'additif ajouté est notamment un additif alimentaire, tel que par exemple défini plus bas.

Selon un mode de réalisation, le produit alimentaire végétal a une teneur en protéines supérieure ou égale à 3%.

Selon un mode de réalisation particulier, le produit alimentaire végétal contient entre 3 et 12% de protéines, et plus préférentiellement entre 4 et 10% de protéines.

Selon un mode de réalisation particulier, le produit alimentaire végétal ne comprend pas de concentrat et/ou d'isolat protéique, en particulier de concentrat et d'isolat protéique.

Il est en effet à noter que les notes végétales apportées par ces protéines à fort dosage peuvent souvent dégrader le profil organoleptique des produits finis.

Par « concentrat », on entend en particulier un concentrat tel que défini dans le Codex Alimentarius, en particulier un produit contenant plus de 65%, et moins de 90% de protéines.

Par « isolat », on entend en particulier un isolat tel que défini dans le Codex Alimentarius, en particulier un produit contenant 90% ou plus de protéines.

Selon un mode de réalisation, le produit alimentaire végétal ne comprend pas de source de protéines autre que les fruits à coque broyés.

Selon un mode de réalisation, le produit alimentaire végétal ne comprend pas de soja.

En effet, il s'avère que certains consommateurs peuvent avoir des réticences face à des produits contenant du soja.

Par « ingrédient naturel acidifiant », on entend par exemple un ingrédient à base d'agrume, en particulier citron ou pamplemousse.

Selon un mode de réalisation, l'ingrédient naturel acidifiant est un acidifiant de type jus de citron concentré ou jus de pamplemousse concentré ou autres agrumes, en particulier un acidifiant de type jus de citron concentré.

De façon plus spécifique, la présente invention se rapporte à un produit alimentaire végétal comprenant (pourcentages exprimés en poids par rapport au poids total du produit) :
- de 5 à 40%, de préférence entre 13% et 30% de fruits à coque broyés de préférence sous forme de purée. Les particules de ladite purée ont de préférence une taille médiane de particules mesurée par granulométrie laser inférieure ou égale à 50 µm ;
- de 5 à 35% de matière grasse végétale, de préférence de 5 à 30% et encore préférentiellement de 5 à 20% ;
- de 0,5 à 20%, de préférence 1 à 15%, d'une source d'amidon telle que farine végétale ou amidon ;
- jusqu'à 30% d'autres matières premières, de préférence végétales, telles que purées ou morceaux de légumes ou de fruits, céréales, graines ou herbes, arômes ;
- jusqu'à 8% de fibres alimentaires végétales ;
- optionnellement, une source naturelle de calcium, de préférence de type Lithothamne, notamment à une teneur comprise entre 0,5 et 1% ;
- jusqu'à 3,5% d'un ingrédient naturel acidifiant, notamment d'acidifiant de type jus de citron concentré ou jus de pamplemousse concentré ou autres agrumes ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- optionnellement, jusqu'à 1% de ferments ; si le ferment est utilisé pour fermenter tout ou partie du fruit à coque broyé, sa teneur peut être réduite à 0,2% ;
- de l'eau, entre 40% et 75%, préférablement de l'ordre de 55%.

Les autres matières premières, de préférence végétales, sont par exemple des purées ou morceaux de légumes ou de fruits, notamment de fruits. Les fruits sont par exemple un ou des fruits rouges, notamment de la framboise ; de l'ananas ; de la tomate ; ou leurs mélanges.

Ce produit se caractérise par :
- une teneur en extrait sec comprise entre 20 et 55%, préférentiellement entre 30 et 55% ;
- un pH compris entre 4.0 et 5.2 ;
- des caractéristiques d'un produit fromager, en particulier une couleur blanche à jaune, un aspect plus ou moins lisse, une rhéologie plus ou moins ferme et/ou déformable et/ou un goût frais à fromager.

Selon un mode de réalisation, la présente invention se rapporte à un produit alimentaire végétal comprenant (pourcentages exprimés en poids par rapport au poids total du produit) :
- de 5 à 40%, de préférence entre 13% et 30% de fruits à coque broyés de préférence sous forme de purée. Les particules de ladite purée ont de préférence une taille médiane de particules mesurée par granulométrie laser inférieure ou égale à 50 µm ;
- de 5 à 35% de matière grasse végétale, de préférence de 5 à 30% et encore préférentiellement de 5 à 20% ;
- de 0,5 à 20%, de préférence 1 à 15%, d'une source d'amidon telle que farine végétale ou amidon ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- de l'eau, entre 40% et 75%, préférablement de l'ordre de 55%.

Selon un mode de réalisation, la présente invention se rapporte à un produit alimentaire végétal comprenant (pourcentages exprimés en poids par rapport au poids total du produit) :
- de 5 à 40%, de préférence entre 13% et 30% de fruits à coque broyés de préférence sous forme de purée. Les particules de ladite purée ont de préférence une taille médiane de particules mesurée par granulométrie laser inférieure ou égale à 50 µm ;
- de 5 à 35% de matière grasse végétale, de préférence de 5 à 30% et encore préférentiellement de 5 à 20% ;
- de 0,5 à 20%, de préférence 1 à 15%, d'une source d'amidon telle que farine végétale ou amidon ;
- jusqu'à 30% d'autres matières premières, de préférence végétales, telles que purées ou morceaux de légumes ou de fruits, céréales, graines ou herbes, arômes ;
- jusqu'à 8% de fibres alimentaires végétales ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- de l'eau, entre 40% et 75%, préférablement de l'ordre de 55%.

Selon un mode de réalisation, la présente invention se rapporte à un produit alimentaire végétal analogue à des fromages solides non affinés, en particulier des toastinettes (pouvant également être connues sous le nom anglais de « individually wrapped slices » (IWS) ou de « slice on slice » (SOS)) ou des pâtes pressées, comprenant (pourcentages exprimés en poids par rapport au poids total du produit) :
- de 15 à 25% de fruits à coque broyés, en particulier d'amande, de préférence sous forme de purée ;
- de 10 à 20% de matière grasse végétale, notamment de coprah ou huile de colza ;
- de 8 à 15%, d'une source d'amidon telle que farine végétale ou amidon ;
- de 1 à 5% de fibres alimentaires végétales, en particulier de psyllium et éventuellement d'autres fibres, notamment d'inuline ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- jusqu'à 30% d'autres matières premières, de préférence végétales, telles que purées ou morceaux de légumes ou de fruits, céréales, graines ou herbes, arômes ;
- optionnellement, des ferments, notamment à hauteur de 0,01 à 0,1%, en particulier utilisés pour fermenter tout ou partie du fruit à coque broyé ;
- de l'eau, entre 40% et 75%, notamment entre 40% et 55%.

Dans ce mode de réalisation et les suivants, des arômes peuvent être présents dans le produit alimentaire, notamment lorsque ledit produit alimentaire ne comprend pas de ferments.

Ce produit se caractérise notamment par des caractéristiques d'un produit fromager, en particulier d'une couleur jaune (pouvant par exemple être obtenu si nécessaire par la présence de jus de carotte), un aspect lisse, une rhéologie ferme et éventuellement déformable.

Selon un mode de réalisation, la présente invention se rapporte à un produit alimentaire végétal analogue à des fromages solides non affinés, en particulier la feta, comprenant (pourcentages exprimés en poids par rapport au poids total du produit) :
- de 12 à 20% de fruits à coque broyés, en particulier d'amande, de préférence sous forme de purée ;
- de 12 à 20% de matière grasse végétale, en particulier concrète, notamment de coprah ;
- de 10 à 20%, d'une source d'amidon telle que farine végétale et/ou amidon ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- jusqu'à 30% d'autres matières premières, de préférence végétales, telles que purées ou morceaux de légumes ou de fruits, céréales, graines ou herbes, arômes ;
- optionnellement, des ferments, notamment à hauteur de 0,01 à 0,1%, en particulier utilisés pour fermenter tout ou partie du fruit à coque broyé ;
- de l'eau, entre 40% et 75%, notamment entre 45% et 55%.

Ce produit se caractérise notamment par des caractéristiques d'un produit fromager, en particulier une couleur blanche, un aspect peu lisse, une rhéologie moins ferme et un goût frais à fromager.

Selon un mode de réalisation, la présente invention se rapporte à un produit alimentaire végétal analogue à des fromages solides non affinés, en particulier la mozzarella, comprenant (pourcentages exprimés en poids par rapport au poids total du produit) :
- de 10 à 16% de fruits à coque broyés, en particulier d'amande, de préférence sous forme de purée ;
- de 6 à 12% de matière grasse végétale, en particulier concrète, notamment de coprah ;
- de 5 à 10%, d'une source d'amidon telle que farine végétale et/ou amidon ;
- de 1 à 5% de fibres alimentaires végétales, en particulier de l'inuline et éventuellement complété par une fibre de psyllium ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- jusqu'à 30% d'autres matières premières, de préférence végétales, telles que purées ou morceaux de légumes ou de fruits, céréales, graines ou herbes, arômes ;
- optionnellement, des ferments, notamment à hauteur de 0,01 à 0,1%, en particulier utilisés pour fermenter tout ou partie du fruit à coque broyé ;
- de l'eau, entre 40% et 75%, notamment entre 60% et 70%.

Ce produit se caractérise notamment par des caractéristiques d'un produit fromager, en particulier une couleur blanche, un aspect lisse, une rhéologie ferme et déformable et un goût frais à fromager.

Selon un mode de réalisation, la présente invention se rapporte à un produit alimentaire végétal analogue à des fromages solides non affinés, en particulier les bûches, notamment les bûches de chèvre, ou les pâtes molles, comprenant (pourcentages exprimés en poids par rapport au poids total du produit) :
- de 10 à 15% de fruits à coque broyés, en particulier d'amande, de préférence sous forme de purée ;
- de 10 à 16% de matière grasse végétale, en particulier concrète, notamment de coprah et/ou de beurre de cacao ;
- de 6 à 15%, d'une source d'amidon telle que farine végétale et/ou amidon ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- jusqu'à 30% d'autres matières premières, de préférence végétales, telles que purées ou morceaux de légumes ou de fruits, céréales, graines ou herbes, arômes ;
- optionnellement, des ferments, notamment à hauteur de 0,01 à 0,1%, en particulier utilisés pour fermenter tout ou partie du fruit à coque broyé ;
- de l'eau, entre 40% et 75%, notamment entre 50% et 70%.

Ce produit se caractérise notamment par des caractéristiques d'un produit fromager, en particulier une couleur blanche à jaune, un aspect lisse, une rhéologie plus ou moins ferme et/ou déformable.

Selon un mode de réalisation, la présente invention se rapporte à un produit alimentaire végétal analogue à des fromages fondus, en particulier des portions de fromages fondus, comprenant (pourcentages exprimés en poids par rapport au poids total du produit) :
- de 12 à 20% de fruits à coque broyés, en particulier d'amande, de préférence sous forme de purée ;
- de 12 à 22% de matière grasse végétale, en particulier concrète, notamment de coprah ;
- de 6 à 14%, d'une source d'amidon telle que farine végétale et/ou amidon ;
- de 0,1 à 5% de fibres alimentaires végétales, en particulier de l'inuline et éventuellement complété par une fibre de psyllium ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- jusqu'à 30% d'autres matières premières, de préférence végétales, telles que purées ou morceaux de légumes ou de fruits, céréales, graines ou herbes, arômes ;
- optionnellement, des ferments, notamment à hauteur de 0,01 à 0,1%, en particulier utilisés pour fermenter tout ou partie du fruit à coque broyé ;
- de l'eau, entre 40% et 75%, notamment entre 52% et 62%.

Selon un mode de réalisation, la présente invention se rapporte à un produit alimentaire végétal analogue à des fromages sucrés, en particulier aux fruits, comprenant (pourcentages exprimés en poids par rapport au poids total du produit) :
- de 8 à 15% de fruits à coque broyés, en particulier d'amande, de préférence sous forme de purée ;
- de 10 à 16% de matière grasse végétale, en particulier concrète, notamment de coprah et/ou de beurre de cacao ;
- de 4 à 12%, d'une source d'amidon telle que farine végétale et/ou amidon ;
- jusqu'à 15 % de sucre, notamment de 5 à 12 % de sucre ;
- jusqu'à 3,5%, en particulier jusqu'à 0,5%, plus particulièrement jusqu'à 0,2%, d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 30% d'autres matières premières, notamment de 15 à 25%, de préférence végétales, telles que purées ou morceaux de légumes ou de fruits, céréales, graines ou herbes, arômes, plus préférentiellement de type purée de fruit, en particulier fruit rouge, par exemple framboise, ou tomate ;
- de l'eau, entre 40% et 75%, notamment entre 40% et 60%.

De préférence, ce produit alimentaire ne contient aucun autre ingrédient que ceux listés ci-dessus et détaillés ci-après ; en particulier, il est dépourvu de tout produit d'origine animale, notamment des protéines, de lactose, et d'additif alimentaire.

Par additif alimentaire, on entend une substance ajoutée aux aliments dans un but technologique : améliorer leur conservation, réduire les phénomènes d'oxydation, colorer les denrées, renforcer leur goût, etc..., il peut s'agir de colorants (incluant des agents blanchissants), de conservateurs, d'anti-oxydants, d'acidifiants/correcteurs d'acidité et d'agents de texture (stabilisant, émulsifiant, épaississant, gélifiant). L'utilisation d'additifs alimentaires est régie par le Règlement (CE) N°1333/2008 et ces substances sont identifiées par un code au format « E » suivi d'un numéro.

Le produit alimentaire selon l'invention est également dépourvu de tout ingrédient à base de soja. En outre, le produit alimentaire selon l'invention ne contient pas d'isolat ou de concentrât protéiques qu'ils soient d'origine animale ou végétale, ni de jus de céréales ou de légumineuse.

Fruits à coque : le produit alimentaire selon l'invention est constitué d'une base d'un ou de plusieurs fruits à coque, par exemple choisis parmi : l'amande, la noisette, la noix, la noix de cajou, la noix de pécan, la noix du Brésil, la noix de Macadamia, seul ou en mélange ; préférentiellement, il s'agit d'une purée de fruits à coque, préférentiellement d'amande blanche. On entend par purée une préparation de fruits à coque broyés finement sans aucun ajout d'ingrédient, préférentiellement issue d'un procédé de broyage très fin (taille médiane de particules de moins de 50 µm) et réalisé sur des fruits à coque émondés, blanchies et non torréfiés.

Selon un mode de réalisation, le fruit à coque est, ou les fruits à coque comprennent, de l'amande.

L'amande est susceptible de permettre, si nécessaire, l'obtention d'analogues fromagers ayant un profil aromatique dénué de notes indésirables, c'est-à-dire notamment de notes n'appartenant pas aux notes du monde des fromages, et/ou des analogues fromagers ressemblant optiquement à du lait.

De façon surprenante, l'amande permet également l'obtention de toute une gamme de profils aromatiques selon les souches choisies. Cela permet ainsi de couvrir tout un univers fromager via le développement de notes fruités, floral, crème, animal, propionique, bleu, etc...

Selon un mode de réalisation préféré, le produit alimentaire végétal selon l'invention est préparé avec une purée d'amandes blanchies et qui, couplé à un procédé de mélange et de cisaillement et l'ajout d'autres ingrédients, permet l'obtention de textures solides plus ou moins fermes et/ou déformables.

Selon la fermeté et/ou la composition nutritionnelle souhaitées du produit fini, la teneur en purée d'amandes peut être modulée pour réduire ou augmenter l'extrait sec et notamment la teneur en matière grasse et protéines.

Matière grasse végétale : différentes sources de matières grasses végétales peuvent être utilisées : des huiles telles que l'huile de colza, l'huile de tournesol, l'huile d'olive, l'huile de pépins de raisin, l'huile de lin, l'huile de chanvre etc... et des matières grasses concrètes telles que coprah, beurre de cacao, beurre de karité, etc... il peut être utilisé un mélange de différentes matières grasses végétales.

Le choix de la ou des matières grasses végétales est notamment dépendant de la texture du produit fini désiré ainsi que de leur teneur en acides gras saturés, qui impacte le profil nutritionnel du produit fini.

Ainsi, les matières grasses de type liquide à température ambiante seront privilégiées pour des produits plus mous et souples alors que les huiles solides à température ambiante préférées pour des produits plus fermes.

Selon un mode de réalisation préféré, les matières grasses végétales utilisées dans le cadre des produits type feta, mozzarella, tranches ou encore bûches sont les huiles végétales concrètes, c'est-à-dire des matières grasses solides à température ambiante (environ 20°C) et ayant une teneur en acides gras saturés élevées : par exemple, la teneur en acides gras saturés est d'environ 50% pour le l'huile de palme, >90% pour le Coprah et > 45% pour le karité.

Selon un mode de réalisation préféré, les matières grasses végétales utilisées dans le cadre des produits type toastinettes ou portions sont les huiles végétales fluides, c'est-à-dire des matières grasses liquides à température ambiante (environ 20°C) et ayant donc une teneur en acides gras saturés < 15%. Par exemple, la teneur en acides gras saturés est inférieure à 10% pour l'huile de colza, inférieure à 12% pour inférieure à 15% pour l'huile de tournesol ; avantageusement et malgré la sensibilité connue des huiles à l'oxydation et les différents traitements thermiques réalisés lors de la préparation du produit (pasteurisation du mix et dosage à chaud), le produit fini dans son emballage est stable dans le temps et aucune note rance n'est perceptible en fin de conservation ; de préférence, l'huile végétale est choisie parmi l'huile de colza, l'huile de tournesol et l'huile d'olive ou leur mélange.

Tout comme pour la purée de fruits à coque, le pourcentage d'utilisation de la matière grasse impacte directement la texture/fermeté du produit fini.

Ferments : ils peuvent être utilisés pour donner du goût et/ou acidifier le mélange, en remplacement de tout ou partie de l'acidifiant. Différents ferments peuvent être incorporés à la formulation et sont connus de l'Homme du métier. Il peut notamment s'agir de ferments lactiques dont les espèces *Lactococcus lactis ssp lactis* et/ou *cremoris, Lactococcus lactis ssp lactis biovar diactylactis, Leuconostoc lactis, Leuconostoc mesenteroides* et/ou sous-espèces, *Leuconostoc pseudomesenteroides Streptococcus thermophilus, Lactobacillus delbrueckii ssp bulgaricus, Lacticaseibacillus casei, Levilactobacillus brevis,* *Lacticaseibacillus rhamnosus, Lacticaseibacillus paracasei, Lactobacillus acidophilus, Lactobacillus helveticus* ou encore *Pediococcus pentosaceus, Pediococcus acidilactici, Lactiplantibacillus plantarum, Hafnia alvei,* et/ou des ferments d'affinage du genre *Propionibacterium* et/ou de l'espèce *Brevibacterium linens,* et/ou encore des levures dont les genres *Kluyveromyces lactis, Debaromyces hansenii, Saccharomyces cerevisiae, Torulaspora delbrueckii* ou autres espèces de levures et de champignons, tel que *Penicillium roquefortii,* seuls ou en mélange. Les ferments peuvent être ajoutés à différentes étapes du procédé sous la forme d'un levain composé d'une matière première végétale fermentée. Il est également possible d'ajouter directement les ferments concentrés dans le produit refroidi avant dosage.

Différents ferments lactiques peuvent être utilisés, on peut notamment citer les produits commerciaux comme les gammes Danisco^{®} VEGE Cultures (IFF-DuPont N&B), HOLDBAC^{®} YM VEGE (IFF-DuPont N&B).

Selon un mode de réalisation, le produit alimentaire végétal selon l'invention comprend :
- des fruits à coque broyés, de préférence sous forme de purée et de préférence de la purée d'amandes ;
additionnés de :
- au moins une matière grasse végétale ;
- au moins une source d'amidon ;
- au moins un ingrédient naturel acidifiant, notamment un acidifiant de type jus de citron concentré ;
- des ferments ;
- optionnellement, au moins une source de fibres alimentaires végétales ; et
- de l'eau.

De façon plus spécifique, la présente invention se rapporte à un produit alimentaire végétal comprenant (pourcentages exprimés en poids par rapport au poids total du produit) :
- de 5 à 40%, de préférence entre 13% et 30% de fruits à coque broyés de préférence sous forme de purée. Les particules de ladite purée ont de préférence une taille médiane de particules mesurée par granulométrie laser inférieure ou égale à 50 µm ;
- de 5 à 35% de matière grasse végétale, de préférence de 5 à 30% et encore préférentiellement de 5 à 20% ;
- au minimum 3% de protéines et plus préférentiellement entre 4 et 10% de protéines
- de 0,5 à 20%, de préférence 1 à 15%, d'une source d'amidon telle que farine végétale ou amidon ;
- jusqu'à 30% d'autres matières premières, de préférence végétales, telles que purées ou morceaux de légumes ou de fruits, céréales, graines ou herbes, arômes ;
- jusqu'à 8% de fibres alimentaires végétales ;
- optionnellement, une source naturelle de calcium, de préférence de type Lithothamne, notamment à une teneur comprise entre 0,5 et 1% ;
- jusqu'à 3,5% d'un ingrédient naturel acidifiant, notamment d'acidifiant de type jus de citron concentré ; selon un mode de réalisation particulier qui ne met pas en œuvre de source de calcium naturel, l'acidifiant peut être utilisé en une teneur moindre qui peut aller jusqu'à 1,8% ;
- jusqu'à 2,5%, de préférence moins de 2% de sel alimentaire ;
- des ferments, à hauteur de 0,01 à 1%, notamment de 0,01 à 0,1 ou 0,2%, en particulier utilisés pour fermenter tout ou partie du fruit à coque broyé ;
- de l'eau, entre 40% et 75%, préférablement de l'ordre de 55%.

Selon un mode de réalisation particulier, les ferments sont choisis parmi *Lactococcus lactis ssp lactis, Lactococcus lactis ssp cremoris, Lactococcus lactis ssp lactis biovar diactylactis, Leuconostoc lactis, Leuconostoc mesenteroides, Leuconostoc pseudomesenteroides Streptococcus thermophilus, Lactobacillus delbrueckii ssp bulgaricus, Lacticaseibacillus casei, Levilactobacillus brevis, Lacticaseibacillus rhamnosus, Lacticaseibacillus paracasei, Lactobacillus acidophilus, Lactobacillus helveticus, Pediococcus pentosaceus, Pediococcus acidilactici, Lactiplantibacillus plantarum, Hafnia alvei, Propionibacterium, Brevibacterium linens, Kluyveromyces lactis, Debaromyces hansenii, Saccharomyces cerevisiae, Torulaspora delbrueckii, Penicillium roquefortii,* et leurs mélanges.

L'ajout de ferments dans le produit selon l'invention n'a pas pour effet de le texturer par un phénomène de coagulation par exemple. Cet ajout a essentiellement pour effet d'améliorer le profil sensoriel du produit fini en le rapprochant du référent laitier, ce qui peut inclure une contribution à l'acidification du produit, qui joue un rôle sur la perception de fraîcheur du produit.

Dans le cas de la préparation préalable d'une matrice végétale fermentée, aussi appelée levain, celle-ci peut être obtenue de la manière suivante : un fruit à coque ou un mélange de fruits à coque, sous forme de broyat ou de purée, préférentiellement de purée d'amandes, est additionné d'eau de manière à obtenir un mélange contenant de 5 à 30% de fruits à coques puis traité thermiquement afin d'éliminer les flores indigènes. Ce mélange est ensuite fermenté de manière à obtenir un levain, tel que mentionné dans l'ensemble des exemples sous l'étape dénommé « A ». Cette base est inoculée avec un ou plusieurs microorganismes connus par l'Homme de l'art comme pouvant apporter par fermentation des notes laitières et/ou fromagères, dont des notes de « frais » et/ou de « crème » et/ou de « beurre » et/ou de "bleu" et/ou de "fruité" et/ou "affiné" et/ou "animal", par exemple de type chèvre au produit fermenté. Ces cocktails de souches peuvent être composés de une ou plusieurs souches, d'une ou plusieurs espèces dont les espèces suivantes : *Lactococcus lactis ssp lactis, cremoris, Lactococcus lactis ssp lactis biovar diactylactis, Leuconostoc lactis,* et/ou *Leuconostoc mesenteroides, Streptococcus thermophilus, Lactobacillus delbrueckii ssp bulgaricus, Lacticaseibacillus casei, Levilactobacillus brevis, Lacticaseibacillus rhamnosus, Lacticaseibacillus paracasei, Lactobacillus acidophilus, Lactobacillus helveticus, Pediococcus pentosaceus, Pediococcus acidilactici, Lactiplantibacillus plantarum,* le genre *Propionibacterium,* les espèces *Brevibacterium linens, Hafnia alvei,* des levures dont les genres *Kluyveromyces lactis, Debaromyces hansenii, Saccharomyces cerevisiae, Torulaspora delbrueckii* ou autres espèces de levures et/ou de champignons, tel que *Penicillium roquefortii.*

Le mélange est ensuite incubé à une température favorisant la croissance du ou des microorganismes inoculés dans une gamme de température comprise entre 20°C et 45°C. La durée de l'incubation est comprise entre 15h et 48h.

Le levain est ensuite incorporé au moment du mélange des matières végétales de la préparation des analogues de fromages solide non affinés, à hauteur notamment de 60% ou moins du mélange final, plus particulièrement à hauteur de 5 à 60% du mélange final.

Source d'amidon : cet ingrédient peut être choisi parmi la farine de riz, la farine de pois chiche, la farine de pois, la farine de féverole, la farine de haricot, la farine de lupin, la farine de lentille, la farine de châtaigne, l'amidon de riz, l'amidon de blé, l'amidon de maïs, l'amidon de tapioca, l'amidon de pomme de terre... de préférence, on utilisera de la farine de riz et/ou de la fécule de pomme de terre ou de manioc. La farine de riz est par exemple prégélatinisée.

De par sa composition riche en amidon (80%), la farine de riz est un ingrédient intéressant pour proposer des produits Clean Label, sans additif. Son aspect blanc et son gout relativement neutre en comparaison avec d'autres farines permet l'obtention de produits très proches en aspect et en gout à des fromages solides de type feta ou mozzarella. Enfin, l'absence de gluten et sa non-allergénicité sont des propriétés intéressantes.

Pour les mêmes raisons, la fécule de pomme de terre et/ou de manioc est un ingrédient d'intérêt pour proposer des textures lisses et fondantes sans fort impact sur la couleur et le gout.

Outre la viscosité à chaud et les propriétés organoleptiques, un autre critère qui peut être pris en compte pour le choix des références de farine de riz et/ou de fécule repose sur les différences de rétrogradation observées. La rétrogradation est un phénomène de recristallisation de l'amidon (composé de chaînes d'amylopectine et d'amylose) au cours de la conservation qui conduit à un durcissement progressif du produit, dont la texture devient moins souple et plus friable, ce qui n'est pas toujours souhaité et qui peut ne pas être apprécié par le consommateur.

Plusieurs références de farine et amidon ont ainsi pu être testées et ont clairement montré des différences significatives de comportement au cours du vieillissement des produits. Cette différence peut venir de l'origine du produit, de sa composition, ou du procédé de préparation utilisé par le fournisseur. Le choix du type, de l'origine et de la référence des sources d'amidon peut avoir des impacts sur la texture et le goût du produit que l'Homme de l'art pourra ajuster selon ses objectifs et préférences, en lien avec la fermeté recherchée, la durée de conservation et le mode d'utilisation souhaités pour ce produit.

Les références d'amidon de pomme de terre ou de manioc présentant le moins de rétrogradation au cours du temps sont privilégiées dans le cadre de la présente invention en ce qu'elles permettent de proposer des textures fermes et tranchables en restant à des dosages acceptables et ce avec une stabilité de texture des produits au cours de la conservation à 4°C-10°C.

Autres matières premières de préférence végétales : ces matières premières sont distinctes des autres ingrédients végétaux de la recette (purée de fruit à coque, huile, farine ou amidon, fibres) ; elles viennent en compléments des autres ingrédients végétaux listés et elles peuvent être choisies parmi l'ail, fines herbes, herbes de Provence, épices, graines, , calcium tel qu'un extrait de Lithothamne, fruits, légumes et céréales sous forme d'inclusions, de pâtes ou de purées, arômes (par exemple pour apporter une typicité crème, beurre, chèvre, emmental, cheddar, brebis), etc...

Fibres alimentaires végétales : les fibres alimentaires utilisables dans le cadre de l'invention sont :
- les fibres solubles qui peuvent être faiblement texturantes, telles que fibres de chicorée (inulines et fructooligosaccharides), dextrines résistantes ou tout autre oligosaccharide indigestible d'origine végétale et/ou les fibres texturantes de type psyllium, fibres de graines de lin ou de chia, ou autre mucilages naturels. Contrairement aux fibres solubles citées précédemment, le psyllium et les autres fibres mucilagineuses sont des polysaccharides qui augmentent fortement la texture du produit fini et/ou la déformation à la rupture. Le type de fibres soluble et la quantité mise en œuvre est donc à adapter par l'Homme de l'art en fonction de l'effet désiré.
- Optionnellement, il est également possible d'utiliser des fibres insolubles ou partiellement solubles sous réserve d'avoir une taille et forme de particules les rendant indétectables en bouche et une faible capacité de rétention d'eau ; de préférence, on utilisera les fibres solubles.

Il peut être utilisé un mélange de plusieurs fibres alimentaires végétales.

Selon un mode de réalisation particulier, les fibres alimentaires végétales sont choisies parmi les fibres solubles, telles que fibres de chicorée, dextrines résistantes et psyllium ou autres fibres mucilagineuses telles que des fibres de graines de lin ou de chia, et leurs mélanges.

Selon un mode de réalisation plus particulier, les fibres alimentaires végétales comprennent ou sont constituées de psyllium.

L'utilisation de fibres végétales permet d'améliorer le profil nutritionnel du produit fini ainsi que d'apporter une fonctionnalité texturante dans le cadre du psyllium et les autres fibres mucilagineuses.

De façon surprenante, la fibre de psyllium a été identifiée comme l'un des possibles leviers pour l'obtention de textures fermes et souples rappelant très fortement les textures de pâte pressées. L'ajout de 1 à 4% de cette fibre dans des analogues de mozzarella, de tranches de pâtes pressées ou bien même de toastinettes peut permettre de retrouver les signatures produits en termes de textures plus ou moins élastiques selon dosage et s'avère alors un élément clé de ces recettes.

Selon un mode de réalisation particulier, la présente invention se rapporte à un produit alimentaire végétal analogue à des fromages solides non affinés, comprenant :
- de 5 à 40% de purée de fruits à coque broyées ;
- de 5 à 30% de matière grasse végétale ;
- jusqu'à 2,5% de sel alimentaire ;
- optionnellement, jusqu'à 1% de ferments ;
- de 0,5% à 20% d'une source d'amidon ;
- jusqu'à 30% d'autres matières premières telles que purées ou morceaux de légumes ou de fruits, céréales, graines, arômes, ou herbes ;
- optionnellement, une source naturelle de calcium, de préférence de type Lithothamne, notamment à une teneur comprise entre 0,5 et 1% ;
- jusqu'à 8% de fibres alimentaires végétales ;
- jusqu'à 3,5% d'un ingrédient naturel acidifiant, notamment d'acidifiant de type jus de citron concentré ;
- entre 40% et 75% d'eau.

Selon un mode de réalisation particulier, la présente invention se rapporte à un produit alimentaire végétal analogue à des fromages solides non affinés tel que défini précédemment, comprenant une source naturelle de calcium, de préférence de type Lithothamne, notamment à une teneur comprise entre 0,5 et 1%.

Selon un mode de réalisation plus particulier, la présente invention se rapporte à un produit alimentaire végétal analogue à des fromages solides non affinés, comprenant :
- de 5 à 40% de purée de fruits à coque broyées ;
- de 5 à 30% de matière grasse végétale ;
- jusqu'à 2,5% de sel alimentaire ;
- optionnellement, jusqu'à 1% de ferments ;
- de 0,5% à 20% d'une source d'amidon ;
- jusqu'à 30% d'autres matières premières telles que purées ou morceaux de légumes ou de fruits, céréales, graines, arômes, ou herbes ;
- une source naturelle de calcium, de préférence de type Lithothamne, notamment à une teneur comprise entre 0,5 et 1% ;
- jusqu'à 8% de fibres alimentaires végétales ;
- jusqu'à 3,5% d'un ingrédient naturel acidifiant, notamment d'acidifiant de type jus de citron concentré ;
- entre 40% et 75% d'eau.

Selon un mode de réalisation particulier, la présente invention se rapporte à un produit alimentaire végétal analogue à des fromages solides non affinés, comprenant :
- des fruits à coque broyés, de préférence sous forme de purée et de préférence de la purée d'amandes ;
additionnés de :
- au moins une matière grasse végétale ;
- au moins une source d'amidon ;
- au moins un ingrédient naturel acidifiant
- au moins une source de fibres alimentaires végétales, ladite au moins une source étant en particulier une source de psyllium ; et
- de l'eau ;
les fromages solides non affinés étant notamment choisis parmi mozzarella, pâtes pressées, en particulier en tranches, et fromages fondus, en particulier en tranches.

Une combinaison de différentes fibres peut également être envisagée pour jouer à la fois sur la teneur en fibres nutritionnelles et la fonctionnalité recherchée. Le choix de l'origine, de la référence et du dosage des fibres peut avoir des impacts texture et gout que l'Homme de l'art pourra ajuster selon ses objectifs et préférences.

Acidifiant : de préférence, on choisira le jus de citron concentré.

Cet ingrédient permet d'obtenir un pH final du produit entre 4,0 et 5,2 afin d'assurer à la fois la stabilité microbienne du produit au cours de la conservation et d'apporter une acidité sur le profil organoleptique.

Composition nutritionnelle des fromages solides non affinés selon l'invention :

| | Energie (kcal) | Protéine (%) | Matière grasse (%) | Dont acides gras saturés (%) | Glucides (%) | Fibres (%) |
|---|---|---|---|---|---|---|
| Gamme | 150-350 | 3-12 | 8-32 | 1-25 | 1-20 | 0,5-8 |

Les analogues de fromages solides non affinés selon l'invention présentent les caractéristiques suivantes :
   - une couleur la plus proche possible du référent laitier à savoir blanche pour les Analogues de feta, de mozzarella, portions fondus, de pâtes molles et bûches non affinées, et ocre/jaune voir orange pour les analogues de pâtes pressées ou toastinettes ;
   - une texture fondante mais suffisamment ferme et/ou déformable, pour être tranché et conserver au moins partiellement sa forme lors de l'usage
   - un gout le plus laitier/fromager possible, sans gout végétal indésirable.

Des versions aromatisées aux couleurs et gouts marqués, sortant des codes connus du fromage, peuvent bien entendu être envisagées, par exemple avec l'ajout de matière première végétale issue de carotte, betterave, haricots verts, etc....

Par « analogue à des fromages solides », on entend notamment un produit alimentaire végétal qui ne s'écroule pas sur lui-même lors de la coupe, et qui ne laisse pas de trace, lors de la coupe, sur le moyen de coupe.

La coupe peut notamment être effectuée au moyen d'un couteau, ou d'une guillotine et permet de générer des morceaux ou des tranches.

Selon un mode de réalisation particulier, la présente invention se rapporte à un produit alimentaire végétal analogue à des fromages solides non affinés, lesquels sont choisis parmi mozzarella, fromages fondus, notamment en portions ou en tranches, pâtes pressées, notamment en tranches, bûches et pâtes molles fraîches.

Selon un mode de réalisation particulier, le produit alimentaire végétal comporte uniquement des ferments destinés à des fins aromatiques.

Le procédé de préparation du produit selon l'invention comprend les étapes suivantes :
A) optionnellement, préparation d'une matière première végétale fermentée par fermentation d'une partie ou de la totalité des fruits à coque broyés, sous leur forme réhydratée et traitée thermiquement préalablement à l'inoculation des ferments ;
   Cette étape a pour objectif d'améliorer le profil organoleptique du produit fini en apportant une typicité fromagère/laitière. Le fruit à coque est préférentiellement l'amande.
   Le produit fermenté ainsi obtenu peut être ajouté à l'étape B) ou entre les étapes D) et G).
B) mélange des matières premières, pouvant comprendre la matière première végétale fermentée obtenue à l'étape A), via un cisaillement énergique, et, optionnellement, préchauffage par exemple via injection de vapeur ou dispositif à double paroi ;
   Cette étape permet l'hydratation des ingrédients, notamment des poudres, jusqu'à obtention d'une suspension globalement liquide et homogène ; elle est de préférence conduite à une température comprise entre 20 et 65°C, pendant 1 à 30 minutes, sous agitation modérée à élevée dans un cuiseur ou une cuve agitée ; préférentiellement, cette étape est conduite dans un cuiseur à environ 50°C, pendant 5 minutes avec une agitation modérée.
C) traitement thermique du mélange à une température comprise entre 75 et 90°C, par exemple avec injection de vapeur ou double paroi, pendant 1 à 10 minutes sous cisaillement énergique ; Cette étape permet la fonctionnalisation des ingrédients et la pasteurisation des matières premières ; elle est de préférence réalisée à 82°C pendant 2 minutes.
   Le mélange peut ensuite optionnellement être transféré en cuve tampon avec maintien à une température comprise entre 70°C et 85°C.
D) dégazage optionnel et homogénéisation optionnelle;
   Cette étape est de préférence conduite entre 50 bars à 600 bars, de préférence 300 à 500 bars. Cette étape permet entre-autre une coloration plus blanche de la pâte et l'obtention d'une émulsion stable et la réduction de la taille de particules afin de rendre la texture lisse, et si nécessaire, plus gourmande.
E) optionnellement, foisonnement, notamment de 1 à 30%, préférentiellement de 1 à 15% pour produire une texture légèrement aérée ;
   Cette étape permet de générer une texture discontinue et un aspect plus ou moins hétérogène et ainsi proposer des textures proches des référents laitiers comme la mozzarella ou la feta ; elle peut être conduite par injection d'azote sur un foisonneur continu avec des taux de foisonnement compris entre 1% et 30%.
   Le taux de foisonnement pour un volume donné est défini comme la différence entre la masse de produit non foisonné et la masse de produit foisonné, cette valeur étant rapportée à la masse de produit non foisonné et exprimée en %.
F) optionnellement, ajout d'autres matières premières de préférence végétales (herbes, ingrédients aromatiques, marquants, matière première végétale fermentée...) ;
   Selon les technologies de foisonnement, il est possible d'inverser les étapes E) et F).
G) dosage à chaud du produit fini dans son emballage ou dans un containeur intermédiaire (fût/outre/poche...) ; le dosage à chaud est conduit à une température supérieure à 70°C, de préférence comprise entre 74 et 80°C ;
H) refroidissement entre 4 et 10°C ;
I) optionnellement dans le cas d'un dosage dans un containeur intermédiaire, ajout d'autres matières premières de préférence végétales (aromatisantes) et/ou de ferments puis dosage à froid du produit dans son emballage final.
   Le dosage à froid du produit dans son emballage final peut être réalisé comme suit :
J) extrusion/moulage du caillé refroidi pour mise en forme du produit fini ;
K) Enrobage pour un objectif visuel ou organoleptique.
L'ajout des ingrédients peut se faire entre 4 et 20°C, préférentiellement à 10°C. Ce mode de réalisation nécessite un choix d'ingrédients aromatiques fortement réduits en charge microbienne pour assurer une stabilité microbiologique au cours de la conservation du produit. L'ajout de ferments permet d'améliorer le profil organoleptique du produit et/ou la stabilité microbienne du produit fini. Le choix des ferments appropriés est connu de l'Homme du métier.

Dans un mode de réalisation particulier, le procédé de préparation du produit selon l'invention comprend les étapes suivantes :
A) optionnellement, préparation d'une matière première végétale fermentée par fermentation d'une partie ou de la totalité des fruits à coque broyés, sous leur forme réhydratée et traitée thermiquement préalablement à l'inoculation des ferments ;
   Cette étape a pour objectif d'améliorer le profil organoleptique du produit fini en apportant une typicité fromagère/laitière. Le fruit à coque est préférentiellement l'amande.
   Le produit fermenté ainsi obtenu peut être ajouté à l'étape B) ou entre les étapes D) et G).
B) mélange des matières premières, pouvant comprendre la matière première végétale fermentée obtenue à l'étape A), via un cisaillement énergique, et, optionnellement, préchauffage par exemple via injection de vapeur ou dispositif à double paroi ;
   Cette étape permet l'hydratation des ingrédients, notamment des poudres, jusqu'à obtention d'une suspension globalement liquide et homogène ; elle est de préférence conduite à une température comprise entre 20 et 65°C, pendant 1 à 30 minutes, sous agitation modérée à élevée dans un cuiseur ou une cuve agitée ; préférentiellement, cette étape est conduite dans un cuiseur à environ 50°C, pendant 5 minutes avec une agitation modérée.
C) traitement thermique du mélange à une température comprise entre 75 et 90°C, par exemple avec injection de vapeur ou double paroi, pendant 1 à 10 minutes sous cisaillement énergique ; Cette étape permet la fonctionnalisation des ingrédients et la pasteurisation des matières premières ; elle est de préférence réalisée à 82°C pendant 2 minutes.
   Le mélange peut ensuite optionnellement être transféré en cuve tampon avec maintien à une température comprise entre 70°C et 85°C.
D) dégazage optionnel et homogénéisation ;
   Cette étape est de préférence conduite entre 50 bars à 600 bars, de préférence 300 à 500 bars. Cette étape permet entre-autre une coloration plus blanche de la pâte et l'obtention d'une émulsion stable et la réduction de la taille de particules afin de rendre la texture lisse.
E) optionnellement, foisonnement, notamment de 1 à 30%, préférentiellement de 1 à 15% pour produire une texture légèrement aérée ;
   Cette étape permet de générer une texture discontinue et un aspect plus ou moins hétérogène et ainsi proposer des textures proches des référents laitiers comme la mozzarella ou la feta ; elle peut être conduite par injection d'azote sur un foisonneur continu avec des taux de foisonnement compris entre 1% et 30%.
   Le taux de foisonnement pour un volume donné est défini comme la différence entre la masse de produit non foisonné et la masse de produit foisonné, cette valeur étant rapportée à la masse de produit non foisonné et exprimée en %.
F) optionnellement, ajout d'autres matières premières de préférence végétales (herbes, ingrédients aromatiques, marquants, matière première végétale fermentée...) ;
   Selon les technologies de foisonnement, il est possible d'inverser les étapes E) et F).
G) dosage à chaud du produit fini dans son emballage ou dans un containeur intermédiaire (fût/outre/poche...) ; le dosage à chaud est conduit à une température supérieure à 70°C, de préférence comprise entre 74 et 80°C ;
H) refroidissement entre 4 et 10°C ;
I) optionnellement dans le cas d'un dosage dans un containeur intermédiaire, ajout d'autres matières premières de préférence végétales (aromatisantes) et/ou de ferments puis dosage à froid du produit dans son emballage final.
L'ajout des ingrédients peut se faire entre 4 et 20°C, préférentiellement à 10°C. Ce mode de réalisation nécessite un choix d'ingrédients aromatiques fortement réduits en charge microbienne pour assurer une stabilité microbiologique au cours de la conservation du produit. L'ajout de ferments permet d'améliorer le profil organoleptique du produit et/ou la stabilité microbienne du produit fini. Le choix des ferments appropriés est connu de l'Homme du métier.

Dans un autre mode de réalisation, et notamment dans le cadre de produits de type feta, de type feta lisse par exemple, le procédé de préparation du produit selon l'invention comprend les étapes suivantes :
A) optionnellement, préparation d'une matière première végétale fermentée par fermentation d'une partie ou de la totalité des fruits à coque broyés, sous leur forme réhydratée et traitée thermiquement préalablement à l'inoculation des ferments ;
   Cette étape a pour objectif d'améliorer le profil organoleptique du produit fini en apportant une typicité fromagère/laitière. Le fruit à coque est préférentiellement l'amande.
   Le produit fermenté ainsi obtenu peut être ajouté à l'étape B) ou entre les étapes D) et G).
B) mélange des matières premières, pouvant comprendre la matière première végétale fermentée obtenue à l'étape A), via un cisaillement énergique, et, optionnellement, préchauffage par exemple via injection de vapeur ou dispositif à double paroi ;
   Cette étape permet l'hydratation des ingrédients, notamment des poudres, jusqu'à obtention d'une suspension globalement liquide et homogène ; elle est de préférence conduite à une température comprise entre 20 et 65°C, pendant 1 à 30 minutes, sous agitation modérée à élevée dans un cuiseur ou une cuve agitée ; préférentiellement, cette étape est conduite dans un cuiseur à environ 50°C, pendant 5 minutes avec une agitation modérée.
C) traitement thermique du mélange à une température comprise entre 75 et 90°C, par exemple avec injection de vapeur ou double paroi, pendant 1 à 10 minutes sous cisaillement énergique ; Cette étape permet la fonctionnalisation des ingrédients et la pasteurisation des matières premières ; elle est de préférence réalisée à 82°C pendant 2 minutes.
   Le mélange peut ensuite optionnellement être transféré en cuve tampon avec maintien à une température comprise entre 70°C et 85°C.
D) dégazage optionnel et homogénéisation ;
   Cette étape est de préférence conduite entre 50 bars à 300 bars, de préférence 200 bars. Dans l'objectif d'obtenir une texture plus ou moins lisse et/ou hétérogène voir même friable et ainsi se rapprocher des textures de certaines feta laitières du marché, il est même possible de supprimer cette étape de dégazage/homogénéisation.
E) Optionnellement, foisonnement, notamment de 1 à 30%, préférentiellement de 1 à 15% pour produire une texture légèrement aérée ;
   Cette étape permet de générer une texture discontinue et un aspect plus ou moins hétérogène et ainsi proposer des textures proches des référents laitiers comme la mozzarella ou la feta ; elle peut être conduite par injection d'azote sur un foisonneur continu avec des taux de foisonnement compris entre 1% et 30%.
   Le taux de foisonnement pour un volume donné est défini comme la différence entre la masse de produit non foisonné et la masse de produit foisonné, cette valeur étant rapportée à la masse de produit non foisonné et exprimée en %.
F) optionnellement, ajout d'autres matières premières de préférence végétales (herbes, ingrédients aromatiques, marquants, matière première végétale fermentée...) ;
   Selon les technologies de foisonnement, il est possible d'inverser les étapes E) et F).
G) dosage à chaud du produit fini dans son emballage ou dans un containeur intermédiaire (fût/outre/poche...) ; le dosage à chaud est conduit à une température supérieure à 70°C, de préférence comprise entre 74 et 80°C ;
H) refroidissement entre 4 et 10°C ;
I) optionnellement dans le cas d'un dosage dans un containeur intermédiaire, ajout d'autres matières premières de préférence végétales (aromatisantes) et/ou de ferments puis dosage à froid du produit dans son emballage final. L'ajout des ingrédients peut se faire entre 4 et 20°C, préférentiellement à 10°C. Ce mode de réalisation nécessite un choix d'ingrédients aromatiques fortement réduits en charge microbienne pour assurer une stabilité microbiologique au cours de la conservation du produit. L'ajout de ferments permet d'améliorer le profil organoleptique du produit et/ou la stabilité microbienne du produit fini. Le choix des ferments appropriés est connu de l'Homme du métier.

Dans un autre mode de réalisation, et notamment dans le cadre de produits de type feta, de type friable par exemple, le procédé de préparation du produit selon l'invention comprend les étapes suivantes :
A) optionnellement, préparation d'une matière première végétale fermentée par fermentation d'une partie ou de la totalité des fruits à coque broyés, sous leur forme réhydratée et traitée thermiquement préalablement à l'inoculation des ferments ;
   Cette étape a pour objectif d'améliorer le profil organoleptique du produit fini en apportant une typicité fromagère/laitière. Le fruit à coque est préférentiellement l'amande.
   Le produit fermenté ainsi obtenu peut être ajouté à l'étape B) ou entre les étapes D) et G).
B) mélange des matières premières, pouvant comprendre la matière première végétale fermentée obtenue à l'étape A), via un cisaillement énergique, et, optionnellement, préchauffage par exemple via injection de vapeur ou dispositif à double paroi ;
   Cette étape permet l'hydratation des ingrédients, notamment des poudres, jusqu'à obtention d'une suspension globalement liquide et homogène ; elle est de préférence conduite à une température comprise entre 20 et 65°C, pendant 1 à 30 minutes, sous agitation modérée à élevée dans un cuiseur ou une cuve agitée ; préférentiellement, cette étape est conduite dans un cuiseur à environ 50°C, pendant 5 minutes avec une agitation modérée.
C) traitement thermique du mélange à une température comprise entre 75 et 90°C, par exemple avec injection de vapeur ou double paroi, pendant 1 à 10 minutes sous cisaillement énergique ; Cette étape permet la fonctionnalisation des ingrédients et la pasteurisation des matières premières ; elle est de préférence réalisée à 82°C pendant 2 minutes.
   Le mélange peut ensuite optionnellement être transféré en cuve tampon avec maintien à une température comprise entre 70°C et 85°C.
E) Foisonnement, notamment de 1 à 30%, préférentiellement de 1 à 15% pour produire une texture légèrement aérée ;
   Cette étape permet de générer une texture discontinue et un aspect plus ou moins hétérogène et ainsi proposer des textures proches des référents laitiers comme la mozzarella ou la feta ; elle peut être conduite par injection d'azote sur un foisonneur continu avec des taux de foisonnement compris entre 1% et 30%.
   Le taux de foisonnement pour un volume donné est défini comme la différence entre la masse de produit non foisonné et la masse de produit foisonné, cette valeur étant rapportée à la masse de produit non foisonné et exprimée en %.
F) optionnellement, ajout d'autres matières premières de préférence végétales (herbes, ingrédients aromatiques, marquants, matière première végétale fermentée...) ;
   Selon les technologies de foisonnement, il est possible d'inverser les étapes E) et F).
G) dosage à chaud du produit fini dans son emballage ou dans un containeur intermédiaire (fût/outre/poche...) ; le dosage à chaud est conduit à une température supérieure à 70°C, de préférence comprise entre 74 et 80°C ;
H) refroidissement entre 4 et 10°C ;
I) optionnellement dans le cas d'un dosage dans un containeur intermédiaire, ajout d'autres matières premières de préférence végétales (aromatisantes) et/ou de ferments puis dosage à froid du produit dans son emballage final.
L'ajout des ingrédients peut se faire entre 4 et 20°C, préférentiellement à 10°C. Ce mode de réalisation nécessite un choix d'ingrédients aromatiques fortement réduits en charge microbienne pour assurer une stabilité microbiologique au cours de la conservation du produit. L'ajout de ferments permet d'améliorer le profil organoleptique du produit et/ou la stabilité microbienne du produit fini. Le choix des ferments appropriés est connu de l'Homme du métier.
Ce procédé est dépourvu d'étape de dégazage/homogénéisation, ce qui peut permettre d'obtenir une texture plus ou moins lisse et/ou hétérogène voir même friable et ainsi se rapprocher des textures de certaines feta laitières du marché.

Le Tableau 1 reprend les opérations unitaires pouvant être mises en œuvre dans le procédé selon l'invention et indiquées dans les exemples qui suivent :

**Tableau 1**

| **Etape unitaire** | **Fonction** | **Valeurs possibles** | **Valeurs préférentielles (mises en œuvre dans les exemples qui suivent)** |
|---|---|---|---|
| Fermentation matières premières (étape optionnelle) **A** | Améliorer le profil organoleptique des matières premières en apportant une typicité fromagère/laitière | Fermentation de fruits à coque | Fermentation jus d'amande |
| Réhydratation, Mélange et Préchauffage (optionnel) des ingrédients **B** | Mélanger les différents ingrédients de manière à obtenir une suspension globalement liquide et homogène | Température de mélange entre 20 et 65 °C Temps de mélange entre 1min et 30 min Cuiseur, cuve agitée | Cuiseur, mélange 5 min à 50°C |
| Pasteurisation **C** | Fonctionnalisation des ingrédients par le traitement thermique et pasteurisation des matières premières | 75°C à 90°C De 1 à 10 min | 82°C, 2 min |
| Dégazage (optionnel) et Homogénéisation (optionnel) **D** | Emulsion stable, réduction taille de particules pour texture lisse et enfin, levier de texturation | 50 à 600 bars | 300 - 500 bars |
| Foisonnement (Étape optionnelle) **E** | Générer une texture aérée pour augmenter la gourmandise | Injection azote sur foisonneur avec paramètres connus de l'Homme du métier | Ajuster selon taux de foisonnement choisi (0-30%) |
| Injection d'ingrédients (Etape optionnelle) **F** | Apporter des marquants et/ou une aromatisation | Aucune limite pour l'aromatisation. Taille des marquants max dépendant des buses de dosages | |
| Dosage (emballage final, bloc moule ou fut) **G** | Doser le produit | Dosage à chaud > 70°C | T°C de dosage à chaud entre 72 °C et 80°C |
| Refroidissement **H** | Refroidir et texturer le produit pour l'obtention d'une base ou d'un produit fini | T°C=4°C - 10°C | T°C de stockage entre 4°C et 10°C |
| Injection d'ingrédients (Etape optionnelle) et dosage dans l'emballage final **I** | Apporter des marquants ou aromates ou un/des ferments pour une aromatisation et/ou améliorer la conservation du produit | T°C = 4 - 20°C | T°C : 10°C |
| Extrusion à froid **J** | Reformer le caillé selon format choisi (bûche par exemple) | Poussoir à vis type Vemag | Poussoir utilisé classiquement en techno fromagère ou produits carnés |
| Enrobage (étape optionnelle) **K** | Enrober et décorer le produit avec des ingrédients dans un objectif visuel et organoleptique | enrobage type cendres, herbes, graines, épices, ... | |

Outre le choix des bonnes matières premières permettant d'optimiser les profils organoleptiques, le choix des étapes du procédé permet de proposer différents types de produits via une ligne d'équipements commune.

Selon un autre aspect, l'invention concerne un produit alimentaire végétal susceptible d'être obtenu selon un procédé tel que défini précédemment.

### FIGURES

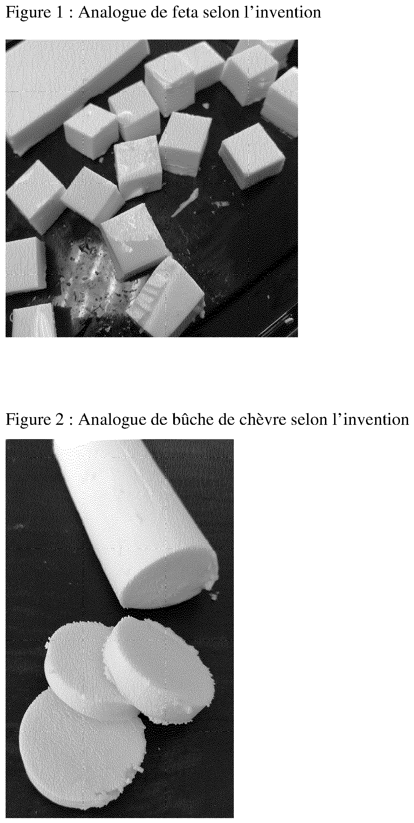

La figure 1 est une photographie du produit de l'exemple 1 qui est un analogue de feta non foisonné ;
La figure 2 est une photographie du produit de l'exemple 2 qui est un analogue de bûche de chèvre non affinée ;

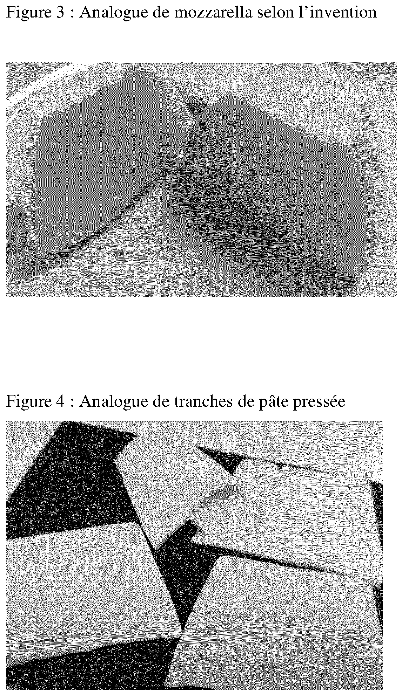

La figure 3 est une photographie du produit de l'exemple 3 qui est un analogue de mozzarella
La figure 4 est une photographie du produit de l'exemple 4 qui est un analogue de tranches de pâte pressée ;

### EXEMPLES

**Exemple 1** : Analogue de **feta :** Eau 51.05%, Purée d'amande 16%, Coprah 16%, amidon 9.7%, farine de riz 4%, sel 1.8%, jus de citron concentré 1.2%, arômes naturels 0.25%

Le procédé comprend les étapes (A) - B - C - D - (F) - G - H. Les étapes indiquées dans les exemples entre parenthèses sont optionnelles.

Comme décrit dans le document, une alternative est de supprimer l'étape d'homogénéisation (D) et/ou d'ajouter une étape de foisonnement (E) pour gagner en friabilité/hétérogénéité et se rapprocher d'autant plus d'une texture de feta laitière friable.

Dans une variante de la formule, une préparation à base de purée d'amande (15%) et d'eau (85%) peut être inoculée et fermentée avec des souches connues de l'Homme du métier pour apporter des notes animales, lors de l'étape A. Cette matière végétale fermentée et aromatisée peut être incorporée lors de l'étape B à hauteur de 2 à 30% dans le mélange final en remplacement d'une partie de la purée d'amande et de l'eau pour rester à physico-chimie équivalente avec une version non fermentée. Les valeurs nutritionnelles du produit de l'Exemple 1 sont indiquées dans le Tableau 2 :

**Tableau 2**

| Teneur pour 100g | |
|---|---|
| Energie (kcal) | 298 |
| Protéines | 5.2 |
| Glucides | 12 |
| Dont sucres | 1 |
| Lipides | 24 |
| Dont Acides Gras Saturés | 15 |
| Fibres | 1 |

L'ajout d'ingrédients de type aromates ou épices est une variante de cette formule Nature, ces ingrédients étant ajoutés à l'étape F.

Les étapes B) et C) peuvent être notamment réalisées avec cuiseur de type Stephan ou Karl-Schnell.

**Exemple 2 :** Analogue de **Bûche de chèvre non affinée :** Eau 58.5%, purée d'amande 13%, coprah 14%, amidon 6.5%, farine de riz 5%, jus de citron concentré 1.5%, sel 1.1%, arôme naturel 0.4%.

2 types de dosages peuvent envisagés :
- Dosage en moule à chaud, refroidissement et démoulage/emballage selon le procédé suivant : (A) - B - C - D - (F) - G - H
- Dosage du produit en fut/poche, refroidissement du caillé et reprise à froid dans une mouleuse pour formation de buche/palet et emballage selon le procédé suivant : (A) - B - C - D - G - H - (I) - J - (K).

Dans une variante de la formule, une préparation à base de purée d'amande (10%), d'huile de coprah (2%) et d'eau (88%) peut être inoculée et fermentée avec des souches connues de l'Homme du métier pour générer des notes de chèvre, lors de l'étape A. Cette matière végétale fermentée et aromatisée peut être incorporée lors de l'étape B à hauteur de 2 à 30% dans le mélange final en remplacement d'une partie de la purée d'amande, de l'huile de coprah et de l'eau pour rester à physico-chimie équivalente avec une version non fermentée.

**Exemple 3 : Analogue de mozzarella** : 65,6% eau, 13,2% purée d'amande, 9% Coprah, 5% fécule, 1,5% farine de riz, 3,4% fibres, 1% sel, 1% jus de citron concentré, 0,3% arôme naturel. Le procédé comprend les étapes suivantes : (A) - B - C - D - (F) - G - H

**- Exemple 4 : Analogue de Pâte pressée :** 48.9% eau, 19% amande, 14% Coprah, 13% fécule, 2.5% psyllium, 1.3% sel, 1.1% jus de citron concentré, 0.2% arôme naturel, 0.2% extrait de levure. Possible d'ajouter un ingrédient colorant pour apporter une légère note jaune. Le procédé comprend les étapes suivantes : (A) - B - C - D - (F) - G - H

Le produit dosé en bloc une fois refroidi et texturé peut alors être tranché selon des méthodes connues de l'Homme du métier.

Dans une variante de la formule, une préparation à base de purée d'amande (10%) et d'eau (90%) peut être inoculée et fermentée avec des souches connues de l'Homme du métier pour apporter des notes fromagères par exemple de type propioniques, umami lors de l'étape A. Cette matière végétale fermentée et aromatisée peut être incorporée lors de l'étape B à hauteur de 2 à 30% dans le mélange final en remplacement d'une partie de la purée d'amande et de l'eau pour rester à physico-chimie équivalente avec une version non fermentée.

**- Exemple 5 : Analogue de Toastinettes (pouvant également être connues sous le nom anglais de « individually wrapped slices » (IWS) ou de « slice on slice » (SOS)) fondus :**
51.6% eau, 16% purée d'amande, 15% huile de colza, 10% fécule, 4.6% fibres (psyllium et inuline), 1.3% sel, 1.1% jus de citron concentré, 0.3% arôme naturel, 0.1% d'un ingrédient colorant. Le procédé comprend les étapes suivantes : (A) - B - C - D - (F) - G - H.

Le produit une fois refroidi et texturé peut alors être tranché selon des méthodes connues de l'Homme du métier.

- **Exemple 6 : Portions d'analogues de Fromages Fondus :** 57% eau, 14% purée amande, 17% Coprah, 3% farine de riz, 6% d'amidon de pomme de terre, 1% d'inuline, 1% jus de citron concentré, 0,8% sel, 0.2% arôme naturel. Le procédé comprend les étapes : (A) - B - C - D - (F) - G - H.

Dans une variante de la formule, une préparation à base de purée d'amande (20%) et d'eau (80%) peut être inoculée et fermentée avec des souches connues de l'Homme du métier pour apporter des notes laitières de type beurré, crème ou yaourt lors de l'étape A. Cette matière végétale fermentée et aromatisée peut être incorporée lors de l'étape B à hauteur de 2 à 30% dans le mélange final en remplacement d'une partie de la purée d'amande et de l'eau pour rester à physico-chimie équivalente avec une version non fermentée..

**- Exemple 7 : Type snack sucré :** 40% eau, 11% purée amande, 13% Coprah, 3.9% farine de riz, 4% d'amidon, 9% sucre, 0,1% jus de citron concentré, 19% purée de fruits (framboise). Le procédé comprend les étapes : (A) - B - C - D - (F) - G - H.

**- Exemple 8 : Analogue de Pâte molle non affinée** : 12,7% eau, 63,5% lait d'amande fermenté (79,95% eau, 20% purée d'amande, 0,05% ferments lactiques), 12% beurre de cacao désaromatisé, 8% farine de riz, 0,9% NaCl, 2,5% fibre végétale, 0.2% arômes naturels, 0,2% jus de citron concentré. Le procédé comprend les étapes : (A) - B - C - D - G - H - K.

### - Exemple 9 : caractérisation rhéologique des solides tranchables

Différents produits finis (fromages laitiers et produits selon l'invention) ont été tranchés à l'aide d'une machine de traction-compression Universelle Instron équipée d'une géométrie en forme de couteau. Celui-ci descend rapidement (10 mm/s) dans le produit jusqu'à une distance de 20 mm afin de reproduire une opération de tranchage telle qu'elle pourrait être effectuée par un consommateur. La force maximale en fin de déplacement, exprimée en Newton (N), est la moyenne de trois mesures et est indiquée dans le Tableau 3.

| Produit | Force (N) |
|---|---|
| Feta laitière 1 | 29 |
| Feta laitier 2 | 38 |
| Exemple 1 - analogue de feta | 37 |
| Bûche de chèvre laitière 1 | 41 |
| Exemple 2 | 35 |
| Mozzarella laitière 1 | 12 |
| Exemple 3 | 10 |
| Pâte pressée laitière 1 | 92 |
| Pâte pressée laitière 2 | 150 |
| Exemple 4 | 110 |

Les forces au tranchage des produits selon l'invention mentionnés dans les exemples sont du même ordre de grandeur que celles des référents laitiers. La résistance au tranchage peut être modulée selon les besoins en ajustant les paramètres de formulation et de procédé de fabrication.

## Revendications

1. Produit alimentaire végétal analogue à des fromages solides non affinés, comprenant :
- des fruits à coque broyés, de préférence sous forme de purée ;
additionnés de :
- au moins une matière grasse végétale ;
- au moins une source d'amidon ;
- au moins un ingrédient naturel acidifiant ;
- optionnellement, au moins une source de fibres alimentaires végétales ; et
- de l'eau ;
**caractérisé en ce qu'**il ne contient aucun additif ajouté.

2. Produit alimentaire végétal selon la revendication 1, lequel a une teneur en protéines supérieure ou égale à 3%, ledit produit alimentaire contenant en particulier entre 3 et 12% de protéines, et plus préférentiellement entre 4 et 10% de protéines.

3. Produit alimentaire végétal selon la revendication 1 ou 2 ne comprenant pas de concentrat et/ou d'isolat de protéines.

4. Produit alimentaire végétal selon l'une quelconque des revendications précédentes, comprenant :
- des fruits à coque broyés, de préférence sous forme de purée et de préférence de la purée d'amandes ;
additionnés de :
- au moins une matière grasse végétale ;
- au moins une source d'amidon ;
- au moins un ingrédient naturel acidifiant, notamment un acidifiant de type jus de citron concentré ;
- des ferments ;
- optionnellement, au moins une source de fibres alimentaires végétales ; et
- de l'eau.

5. Produit alimentaire végétal selon l'une quelconque des revendications précédentes ne comprenant pas de soja.

6. Produit alimentaire végétal selon la revendication 1, **caractérisé en ce qu'**il comprend (pourcentages exprimés en poids par rapport au poids total du produit) :
- de 5 à 40% de purée de fruits à coque broyées ;
- de 5 à 35% de matière grasse végétale ;
- de 0,5% à 20% d'une source d'amidon ;
- jusqu'à 30% d'autres matières premières, de préférence végétales, telles que purées ou morceaux de légumes ou de fruits, céréales, graines ou herbes, arômes ;
- jusqu'à 8% de fibres alimentaires végétales ;
- optionnellement, une source naturelle de calcium, de préférence de type Lithothamne, notamment à une teneur comprise entre 0,5 et 1% ;
- jusqu'à 3,5% d'un ingrédient naturel acidifiant, notamment d'acidifiant de type jus de citron concentré ;
- jusqu'à 2,5% de sel alimentaire ;
- optionnellement, jusqu'à 1% de ferments ;
- entre 40% et 75% d'eau.

7. Produit alimentaire végétal selon la revendication 1 ou la revendication 2, **caractérisé par** :
- une teneur en extrait sec comprise entre 20 et 55% ;
- un pH entre 4.0 et 5.2 ;
- des caractéristiques d'un produit fromager, en particulier une couleur blanche à jaune, un aspect plus ou moins lisse, une rhéologie plus ou moins ferme et/ou déformable et/ou un goût frais à fromager.

8. Produit alimentaire végétal selon l'une quelconque des revendications précédentes, **caractérisé en ce que** le fruit à coque est l'amande.

9. Produit alimentaire végétal selon l'une quelconque des revendications précédentes, **caractérisé en ce que** la source d'amidon est une farine de riz et/ou une fécule de pomme de terre ou de manioc.

10. Produit alimentaire végétal selon la revendication 9, **caractérisé en ce que** la farine de riz est prégélatinisée.

11. Produit alimentaire végétal selon l'une quelconque des revendications précédentes, **caractérisé en ce que** les fibres alimentaires végétales sont choisies parmi les fibres solubles, telles que fibres de chicorée, dextrines résistantes et psyllium ou autres fibres mucilagineuses telles que des fibres de graines de lin ou de chia, et leurs mélanges.

12. Procédé de préparation du produit selon l'une quelconque des revendications 1 à 11, comprenant les étapes suivantes :
A) optionnellement, préparation d'une matière première végétale fermentée par fermentation d'une partie ou de la totalité de fruits à coque broyés, sous leur forme réhydratée et traité thermiquement préalablement à l'inoculation des ferments ;
B) mélange des matières premières, pouvant comprendre la matière première végétale fermentée obtenue à l'étape A), via un cisaillement énergique, et, optionnellement, préchauffage ;
C) traitement thermique du mélange à une température comprise entre 75 et 90°C pendant 1 à 10 minutes sous cisaillement énergique ;
D) dégazage optionnel et homogénéisation optionnelle;
E) optionnellement, foisonnement ;
F) optionnellement, ajout d'autres matières premières de préférence végétales ;
les étapes E) et F) peuvent être inversées ;
G) dosage à chaud à une température supérieure à 70°C du produit fini dans son emballage ou dans un containeur intermédiaire ;
H) refroidissement entre 4 et 10°C ;
Optionnellement dans le cas d'un dosage dans un containeur intermédiaire :
I) ajout d'autres matières premières de préférence végétales aromatisantes et/ou de ferments
J) extrusion/moulage du caillé refroidi pour mise en forme du produit fini
K) Enrobage pour un objectif visuel ou organoleptique
